# EUROPEAN PATENT APPLICATION

(11) **EP 4 589 749 A1**
(43) Date of publication of application: **23.07.2025**
(21) Application number: 23929786.4
(22) Date of filing: 22.08.2023
(51) Int. Cl.: H01M 50/30, H01M 10/0525, H01M 50/249, H01M 50/204

(54) **BATTERY CELL, BATTERY AND ELECTRIC DEVICE**

(30) Priority: 24.03.2023 CN 202310300366
(71) Applicant: Contemporary Amperex Technology (Hong Kong) Limited, Central (HK)
(72) Inventor: LEI, Yuyong, Ningde, Fujian 352100 (CN); GUO, Zhijun, Ningde, Fujian 352100 (CN); JIN, Haizu, Ningde, Fujian 352100 (CN)
(74) Representative: Thoma, Michael
(86) International application number: PCT/CN2023/114280
(87) International publication number: WO 2024/198210

(57) **Abstract**

Embodiments of the present application provide a battery cell, a battery, and an electrical device, which belong to the technical field of batteries. The battery cell includes a shell, an electrode assembly, and a pressure relief mechanism. The electrode assembly includes a main body part and a tab, where the tab is arranged on at least one end of the main body part along a first direction. The shell includes a first wall part and a second wall part. Along a second direction, the first wall part and the second wall part are arranged opposite to each other. The first wall part is configured to support the main body part. A channel gap is formed between the second wall part and the main body part. The channel gap is configured to connect spaces in the shell that are located at both ends of the main body part along the first direction. The second direction intersects with the first direction. The pressure relief mechanism is arranged on the first wall part, and along the first direction, a center of the pressure relief mechanism deviates from a center of the first wall part. A discharge medium at both ends of the main body part can quickly flow to the pressure relief mechanism, shortening the time for the discharge medium to reach the pressure relief mechanism, improving the timeliness of pressure relief of the battery cell, and thereby improving the reliability of the battery cell.

## Description

### CROSS-REFERENCE TO RELATED APPLICATIONS

The present application claims the priority of Chinese Patent Application 202310300366X filed on March 24, 2023 and entitled "BATTERY CELL, BATTERY, AND ELECTRICAL DEVICE", the entire contents of which are incorporated herein by reference.

### TECHNICAL FIELD

The present application relates to the technical field of batteries, and specifically relates to a battery cell, a battery, and an electrical device.

### BACKGROUND

Batteries are widely used in electronic devices, such as a mobile phone, a laptop, a battery cart, an electric vehicle, an electric plane, an electric ship, an electric toy car, an electric toy ship, an electric toy plane, and an electric tool.

In battery technology, a pressure relief mechanism may be arranged in a battery cell, and pressure may be released through the pressure relief mechanism when the battery cell is in thermal runaway. For general battery cells, there is still a problem of untimely pressure relief, and the reliability of the battery cells is poor. Therefore, how to improve the reliability of the battery cell is an urgent problem to be solved in battery technology.

### SUMMARY OF THE INVENTION

Embodiments of the present application provide a battery cell, a battery, and an electrical device, which can effectively improve the reliability of the battery cell.

In a first aspect, embodiments of the present application provide a battery cell, including a shell, an electrode assembly, and a pressure relief mechanism. The electrode assembly includes a main body part and a tab, and the tab is arranged on at least one end of the main body part along a first direction. The shell includes a first wall part and a second wall part. Along a second direction, the first wall part and the second wall part are arranged opposite to each other. The first wall part is configured to support the main body part. A channel gap is formed between the second wall part and the main body part. The channel gap is configured to connect spaces in the shell that are located at both ends of the main body part along the first direction. The second direction intersects with the first direction. The pressure relief mechanism is arranged on the first wall part, and along the first direction, a center of the pressure relief mechanism deviates from a center of the first wall part.

In the above technical solution, the channel gap is formed between the first wall part and the main body part, and the center of the pressure relief mechanism deviates from the center of the first wall part. When the battery cell is in thermal runaway, along the first direction, a discharge medium located at one end, close to the pressure relief mechanism, of the main body part in the shell may flow from the bottom of the main body part to the pressure relief mechanism, and the discharge medium located at one end, away from the pressure relief mechanism, of the main body part in the shell may flow to the end of the main body part close to the pressure relief mechanism through the channel gap located at the top of the main body part, and then flows from the bottom of the main body part to the pressure relief mechanism, which shortens a path of the discharge medium located at both ends of the main body part flowing from the bottom of the main body part to the pressure relief mechanism, so that the discharge medium at both ends of the main body part can flow to the pressure relief mechanism quickly, shortening the time for the discharge medium to reach the pressure relief mechanism, improving the timeliness of pressure relief of the battery cell, and thereby effectively improving the reliability of the battery cell.

In some embodiments, along the first direction, the size of the shell is L, and a distance between the center of the pressure relief mechanism and the center of the first wall part is L₁, satisfying: L₁/L ≥ 1/6. In this way, the distance between the center of the pressure relief mechanism and the center of the first wall part is not too small, so that the pressure relief mechanism is closer to one end of the main body along the first direction, shortening the path of the discharge medium located at both ends of the main body part flowing from the bottom of the main body part to the pressure relief mechanism.

In some embodiments, L₁/L ≥ 1/3. The distance between the center of the pressure relief mechanism and the center of the first wall part is further increased, so that the pressure relief mechanism is closer to one end of the main body along the first direction, further shortening the path of the discharge medium located at the both ends of the main body part flowing from the bottom of the main body part to the pressure relief mechanism.

In some embodiments, along the first direction, the size of the shell is L, satisfying: L ≥ 200 mm. In this way, the size of the shell in the first direction is long, which can satisfy high capacity requirements of the battery cell.

In some embodiments, along the second direction, the minimum width of the channel gap is H, satisfying: H ≥ 1 mm. In this way, the minimum width of the channel gap is not too small, and the discharge medium located at one end of the main body part can more easily flow to the other end of the main body part through the channel gap.

In some embodiments, H ≤ 5 mm. The increase of the minimum width of the channel gap may reduce the size of the main body part in the second direction, so that the energy density of the battery cell is reduced, and a shaking space of the electrode assembly along the second direction in the shell is increased, increasing the risk of failure of the battery cell in a vibration environment. Furthermore, H ≤ 5mm, so that the energy density of the battery cell is high and the probability of failure of the battery cell in a vibration environment is reduced.

In some embodiments, 2 mm ≤ H ≤ 3.5 mm. The discharge medium in the shell can pass through the channel gap more easily, the energy density of the battery cell can also be improved, and the probability of failure of the battery cell in the vibration environment can be further reduced.

In some embodiments, along the second direction, spacing between a midplane of the main body part and the second wall part is greater than spacing between the midplane of the main body part and the first wall part. The main body part and the shell are eccentrically arranged in the second direction, so that a wider channel gap is formed between the second wall part and the main body part, so as to facilitate quick flow of the discharge medium in the channel gap.

In some embodiments, along the first direction, the pressure relief mechanism does not extend beyond any end of the main body part. In this way, there is still a certain distance between the main body part and the end of the shell along the first direction, which is not easily affected by external factors, and improves the service life of the pressure relief mechanism.

In some embodiments, along the first direction, the pressure relief mechanism at least partially extends beyond one end of the main body part. The part of the pressure relief mechanism that extends beyond the main body part is not blocked by the main body part, so that the discharge medium located at both ends of the main body part can reach the pressure relief mechanism more quickly, further shortening the time for the discharge medium to reach the pressure relief mechanism.

In some embodiments, only one pressure relief mechanism is arranged on the first wall part. The structure of the battery cell is simplified and the production cost is reduced.

In some embodiments, a plurality of pressure relief mechanisms are arranged on the first wall part. The battery cell may release the internal pressure of the battery cell through the plurality of pressure relief mechanisms, thereby improving a pressure relief capacity of the battery cell.

In some embodiments, two pressure relief mechanisms are arranged on the first wall part, and along the first direction, the two pressure relief mechanisms are located on two sides of the center of the first wall part, respectively. The discharge medium located at one end of the main body part may flow to the closer pressure relief mechanism, or may flow to the farther pressure relief mechanism through the channel gap; similarly, the discharge medium located at the other end of the main body part may flow to the closer pressure relief mechanism, or may flow to the farther pressure relief mechanism through the channel gap, which can further shorten the time for the discharge medium at both ends of the main body part to reach the pressure relief mechanisms, and further improve the timeliness of pressure relief of the battery cell.

In some embodiments, the shell includes a shell body and an end cover. The shell is provided with an opening at at least one end along the first direction. The end cover corresponds to the opening one by one, and the end cover closes the opening. The first wall part and the second wall part are two opposite wall parts of the shell body. When assembling the battery cell, the electrode assembly may be installed in the shell body, and then the end cover closes the opening of the shell body. The battery cell is convenient and fast to assemble.

In some embodiments, openings are formed at both ends of the shell body along the first direction. When assembling the battery cell, the electrode assembly may enter the shell body from any end of the shell body, which can effectively improve the assembly efficiency of the battery cell.

In some embodiments, the shell body includes a third wall part and a fourth wall part. The third wall part and the fourth wall part are arranged opposite to each other along a third direction. The first wall part, the third wall part, the second wall part and the fourth wall part are sequentially connected end to end, and the third direction intersects with the second direction. The shell body including the first wall part, the second wall part, the third wall part and the fourth wall part is substantially in the shape of a quadrangular prism, which is simple in structure and easy to form.

In some embodiments, along the second direction, spacing between the first wall part and the second wall part is D₁. Along the third direction, spacing between the third wall part and the fourth wall part is D₂, and D₂ < D₁. When the electrode assembly expands, the first wall part and the second wall part are less affected by the electrode assembly than the third wall part and the fourth wall part. Since the pressure relief mechanism is located on the first wall part, the risk of the electrode assembly expanding to block or damage the pressure relief mechanism can be reduced.

In some embodiments, the shell body is formed by bending a plate, and front and rear end parts of the plate are connected to each other along the circumferential direction of the opening. When forming the shell body, it is only necessary to bend the plate and connect two end parts of the plate to each other. The shell body has a simple forming manner, and the difficulty of forming the shell body can be effectively reduced.

In some embodiments, a connection position of the two end parts is located on the second wall part. The connection position and the pressure relief mechanism are located on two opposite wall parts, reducing the influence of the connection position of the two end parts on the pressure relief mechanism, and improving the reliability of the pressure relief mechanism.

In some embodiments, the two end parts are connected by welding. So that the both ends have good connection strength, and the two end parts are firmer after being connected.

In some embodiments, the shell body is a cuboid shell body, and the first direction is a length direction of the shell body. The shell body is the cuboid shell body, and is simple in structure and easy to form.

In some embodiments, the length of the shell body is a, the width of the shell body is b, the height of the shell body is c, and b ≤ c ≤ a/1.5. a/c ≥ 1.5, the shell body is in the shape of a long strip, which can satisfy high capacity requirements of the battery cell.

In some embodiments, the pressure relief mechanism and the first wall part are integrally formed. In this way, the reliability of the pressure relief mechanism is higher, a connection process for the pressure relief mechanism and the first wall part is saved, and the production cost of the battery cell can be reduced.

In some embodiments, the first wall part includes a weak region and a non-weak region. The weak region is arranged along an edge of the pressure relief mechanism and connects the pressure relief mechanism and the non-weak region. The weak region is configured to crack when the pressure in the battery cell is released. When the pressure in the battery cell is released, the first wall part may crack at the weak region, and the pressure relief mechanism may be opened with the weak region as a boundary, which provides a larger pressure relief area, so that the discharge medium in the shell can be discharged quickly.

In some embodiments, the first wall part is provided with a score groove, and the first wall part forms a weak region in a region where the score groove is provided. The weak region is formed by providing a score groove on the first wall part, so that an integrated pressure relief mechanism is formed, and the pressure relief mechanism has a simple molding method and low production cost.

In some embodiments, the score groove is a groove extending along a closed track. In a pressure relief process, the pressure relief mechanism may be opened by separating from the non-weak region after the first wall part cracks along the score groove, increasing the pressure relief area, and improving a pressure relief rate of the battery cell.

In some embodiments, the pressure relief mechanism and the first wall part are separately arranged, and the pressure relief mechanism is installed on the first wall part. The pressure relief mechanism is a component independent of the shell. The pressure relief mechanism and the shell may be separately produced and then assembled, which is low in production difficulty and high in efficiency.

In some embodiments, the battery cell further includes a supporting member. Along the second direction, the supporting member is arranged between the main body part and the first wall part. The supporting member is configured to support the main body part. The supporting member can bear the gravity of the main body part, and can separate the first wall part from the main body part, reducing the influence of the main body part on the pressure relief mechanism and improving the life of the pressure relief mechanism.

In some embodiments, the battery cell further includes a first insulating member. The first insulating member is wrapped around the main body part. The first insulating member is configured to insulate and isolate the main body part from the shell. Along the second direction, the channel gap is formed between the first insulating member and the second wall part. The first insulating member functions to insulate and isolate the main body part from the shell, achieving insulation between the main body part and the shell, and reducing the probability of short circuit of the battery cell.

In some embodiments, the electrode assembly is a wound type electrode assembly, and a winding centerline of the electrode assembly extends along the first direction.

In some embodiments, the electrode assembly is a stacked type electrode assembly, and a stacking direction of electrode plates in the electrode assembly is perpendicular to the second direction.

In some embodiments, the first direction is perpendicular to the second direction.

In a second aspect, embodiments of the present application provide a battery, including a battery cell according to any embodiment of the first aspect.

In a third aspect, embodiments of the present application provide an electrical device, including a battery cell according to any embodiment of the first aspect, and the battery cell is configured to provide electric energy for the electrical device.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
Fig. 2 is an exploded view of a battery according to some embodiments of the present application;
Fig. 3 is an axonometric view of a battery cell according to some embodiments of the present application;
Fig. 4 is an exploded view of the battery cell shown in Fig. 3;
Fig. 5 is a schematic diagram of a structure of the battery cell shown in Fig. 4;
Fig. 6 is a view of the battery cell shown in Fig. 5 from an A direction;
Fig. 7 is a partial enlarged view at a position B of the battery cell shown in Fig. 5;
Fig. 8 is a partial view of the battery cell shown in Fig. 5;
Fig. 9 is a partial view of a battery cell according to some other embodiments of the present application;
Fig. 10 is an exploded view of a battery cell according to some other embodiments of the present application;
Fig. 11 is a schematic diagram of a structure of the battery cell shown in Fig. 10;
Fig. 12 is a view of the battery cell shown in Fig. 11 from a C direction;
Fig. 13 is an axonometric view of a shell body according to some embodiments of the present application;
Fig. 14 is a schematic diagram of a structure of the shell body shown in Fig. 13;
Fig. 15 is an axonometric view of a shell body according to some other embodiments of the present application;
Fig. 16 is a schematic diagram of a structure of the shell body shown in Fig. 15;
Fig. 17 is a schematic diagram of a structure of the shell body shown in Fig. 15 after unfolding;
Fig. 18 is a view of the shell body shown in Fig. 16 from an E direction;
Fig. 19 is a partial enlarged view at a position F of the shell body shown in Fig. 16;
Fig. 20 is a partial enlarged view of a shell body according to some other embodiments of the present application;
Fig. 21 is a partial enlarged view of a shell body according to still some embodiments of the present application;
Fig. 22 is an exploded view of a battery cell according to still some embodiments of the present application;
Fig. 23 is a schematic diagram of a structure of the battery cell shown in Fig. 22; and
Fig. 24 is a partial enlarged view at a position G of the battery cell shown in Fig. 23.

Reference numbers: 1-shell; 11-shell body; 111-first wall part; 1111-weak region; 1112-non-weak region; 1113-score groove; 1114-recessed groove; 1115-pressure relief hole; 112-second wall part; 1121-first end part; 11211-first end face; 1122-second end part; 11221-second end face; 1123-connection position; 113-third wall part; 114-fourth wall part; 12-end cover; 13-channel gap; 14-first space; 15-second space; 2-electrode assembly; 21-tab; 22-main body part; 221-midplane; 3-pressure relief mechanism; 4-electrode terminal; 5-first insulating member; 6-second insulating member; 7-supporting member; 10-battery cell; 20-box body; 201-first part; 202-second part; 100-battery; 200-controller; 300-motor; 1000-vehicle; X-first direction; Y-second direction; Z-third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, the battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, etc., which is not limited in the embodiments of the present application.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and may function to prevent a short circuit between the positive electrode and the negative electrode while enabling the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}CO_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. As an example, a lithium source material, a potassium metal, or a sodium metal may also be filled or/and deposited in the foam metal, and the lithium source material is a lithium metal and/or a lithium-rich material.

In some implementations, the negative electrode may be a negative electrode plate, and the negative electrode plate may include a negative electrode current collector.

As an example, the negative electrode current collector may be a metal foil, foam metal, or composite current collector. For example, silver surface-treated aluminum or stainless steel, stainless steel, copper, aluminum, nickel, baked carbon, carbon, nickel, or titanium, etc. may be used as the metal foil. The foam metal may be foam nickel, foam copper, foam aluminum, foam alloy, or foam carbon, etc. The composite current collector may include a high molecular material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

As an example, the negative electrode plate may include a negative electrode current collector and a negative electrode active material arranged on at least one surface of the negative electrode current collector.

As an example, the negative electrode current collector has two surfaces opposite in its own thickness direction, and the negative electrode active material is arranged on either one or both of the two opposite surfaces of the negative electrode current collector.

As an example, a negative electrode active material know in the art for battery cells may be used as the positive electrode active material. For example, the negative electrode active material may include at least one of artificial graphite, natural graphite, soft carbon, hard carbon, silicon-based material, tin-based material, and lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the material of the positive electrode current collector may be aluminum, and the material of the negative electrode current collector may be copper.

In some embodiments, the spacer is a separator. The type of the separator is not particularly limited in the present application, and any well-known separator having good chemical stability, mechanical stability, and a porous structure may be selected.

As an example, the main material of the separator may be selected from at least one of glass fiber, non-woven fabric, polyethylene, polypropylene, polyvinylidene fluoride, and ceramic. The separator may be a single-layer film, or may be a multi-layer composite film, which is not particularly limited. When the separator is a multi-layer composite film, the material in each layer may be same or different, which is not particularly limited. The spacer may be a separate component located between the positive electrode and the negative electrode, or may be attached to the surface of the positive electrode and the surface of the negative electrode.

In some embodiments, the spacer is a solid electrolyte. The solid electrolyte is arranged between the positive electrode and the negative electrode, and functions to transport ions and isolate the positive electrode from the negative electrode.

In some implementations, the battery cell further includes an electrolyte that functions to conduct ions between the positive electrode and the negative electrode. The type of the electrolyte is not particularly limited in the present application, and can be selected according to requirements. The electrolyte may be in a liquid state, a gel state, or a solid state.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, or cellulose, etc.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

As an example, a composite solid electrolyte is formed by adding an inorganic solid electrolyte filler into a polymer solid electrolyte.

In some embodiments, the electrode assembly is of a wound type structure. The positive electrode plate and the negative electrode plate are wound into a wound type structure.

In some embodiments, the electrode assembly is of a stacked type structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

As an example, the spacer may be continuously arranged between any adjacent positive electrode plates or negative electrode plates by folding or winding.

In some embodiments, the shape of the electrode assembly may be cylinderical, flat, or polyprismatic, etc.

In some embodiments, the electrode assembly is provided with tabs that can direct electrical current away from the electrode assembly. The tabs include a positive tab and a negative tab.

In some implementations, the battery cell may include a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery, which is not specially limited in the present application.

The battery mentioned in the embodiments of the present application refers to a single physical module including one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

For the development of battery technology, various design factors should be considered, such as energy density, cycle life, discharge capacity, charging-discharging rate, and other performance parameters. In addition, the reliability of the battery cell should also be considered.

In battery technology, a pressure relief mechanism may be arranged in the battery cell to improve the reliability of the battery cell. The pressure relief mechanism on the battery cell has an important impact on the reliability of the battery. For example, when a short circuit, overcharging, or the like occurs, thermal runaway may occur in the battery cell and the pressure may rise suddenly. In this case, the internal pressure and temperature may be released outward through the pressure relief mechanism, to reduce the probability of explosion and fire of the battery cell.

In some cases, the pressure relief mechanism may be arranged on a wall part of the shell that functions to support, so that when the battery cell is in thermal runaway, a discharge medium is discharged to the bottom of the battery cell through the pressure relief mechanism, reducing the probability of the discharge medium damaging electrical elements located at the top of the battery cell. In such battery cell, the tab is arranged on at least one end of the main body part of the electrode assembly in a first direction. The pressure relief mechanism is generally arranged at a middle position of the wall part along the first direction. When the battery cell is in thermal runaway, the discharge medium located at both ends of the main body part along the first direction has a long path to flow from the bottom of the main body part to the pressure relief mechanism, and the discharge medium takes a long time to reach the pressure relief mechanism, which has the risk of untimely pressure relief, and results in poor reliability of the battery cell.

In view of this, embodiments of the present application provide a battery cell, including a shell, an electrode assembly, and a pressure relief mechanism. The electrode assembly includes a main body part and a tab, where the tab is arranged on at least one end of the main body part along a first direction. The shell includes a first wall part and a second wall part. Along a second direction, the first wall part and the second wall part are arranged opposite to each other. The first wall part is configured to support the main body part. A channel gap is formed between the second wall part and the main body part. The channel gap is configured to connect spaces in the shell that are located at both ends of the main body part along the first direction. The second direction intersects with the first direction. The pressure relief mechanism is arranged on the first wall part, and along the first direction, a center of the pressure relief mechanism deviates from a center of the first wall part.

In such battery cell, the channel gap is formed between the first wall part and the main body part, and the center of the pressure relief mechanism deviates from the center of the first wall part. When the battery cell is in thermal runaway, along the first direction, a discharge medium located at one end, close to the pressure relief mechanism, of the main body part in the shell may flow from the bottom of the main body part to the pressure relief mechanism, and the discharge medium located at one end, away from the pressure relief mechanism, of the main body part in the shell may flow to the end, close to the pressure relief mechanism, of the main body part through the channel gap located at the top of the main body part, and then flows from the bottom of the main body part to the pressure relief mechanism, which shortens a path of the discharge medium at both ends of the main body part flowing from the bottom of the main body part to the pressure relief mechanism, so that the discharge medium at both ends of the main body part can flow to the pressure relief mechanism quickly, shortening the time for the discharge medium to reach the pressure relief mechanism, improving the timeliness of pressure relief of the battery cell, and thereby effectively improving the reliability of the battery cell.

The battery cell described in the embodiments of the present application is applicable to batteries and electrical devices using the battery cells.

The electrical device may be, but not limited to, a vehicle, a mobile phone, a portable device, a laptop computer, a ship, a spacecraft, an electric toy or an electric tool, etc. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

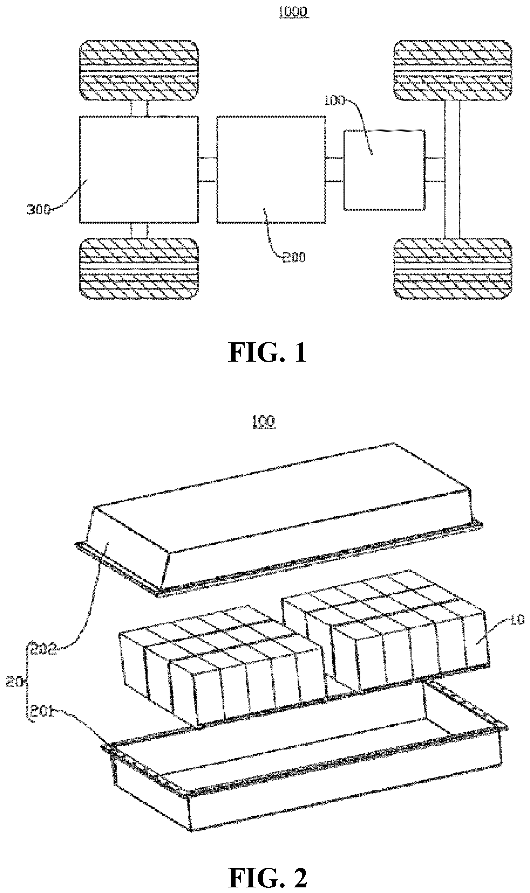

Referring to FIG. 1, FIG. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to Fig. 2, Fig. 2 is an exploded view of a battery 100 according to some embodiments of the present application. The battery 100 includes a battery cell 10 and a box body 20, where the battery cell 10 is accommodated in the box body 20.

The box body 20 is a component for accommodating the battery cell 10, the box body 20 provides an accommodating space for the battery cell 10, and the box body 20 may be of various structures. In some embodiments, the box body 20 may include a first part 201 and a second part 202. The first part 201 and the second part 202 are covered by each other to define the accommodating space for accommodating the battery cell 10. The first part 201 and the second part 202 may have a variety of shapes, such as a cuboid, a cylinder, etc. The first part 201 may be of a hollow structure with one side open, the second part 202 may also be of a hollow structure with one side open, and the open side of the second part 202 covers the open side of the first part 201, so as to form the box body 20 having the accommodating space. It is also possible that the first part 201 may be of a hollow structure with one side open, the second part 202 may be a plate-like structure, and the second part 202 covers the open side of the first part 201, so as to form the box body 20 having the accommodating space. The first part 201 and the second part 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. It is also possible that all the battery cells 10 are directly connected in series or in parallel or in series-parallel, and then an entirety composed of all the battery cells 10 is received in the box body 20.

In some embodiments, the battery 100 further includes a bus component, and the plurality of battery cells 10 may be electrically connected to each other via the bus component, so as to implement series connection, parallel connection, or series-parallel connection of the plurality of battery cells 10. The bus component may be a metal conductor, such as copper, iron, aluminum, stainless steel, or aluminum alloy.

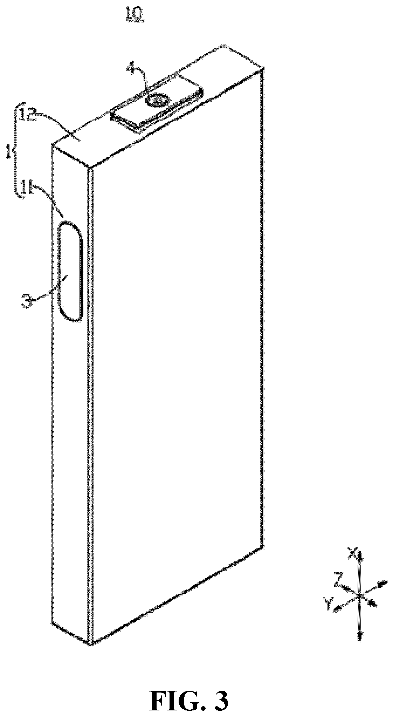

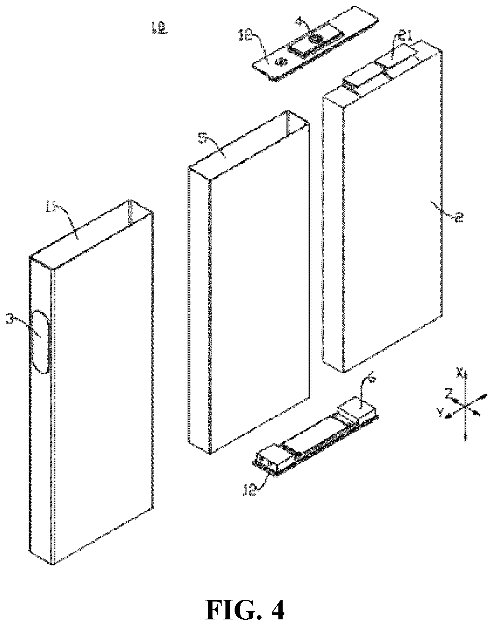

Referring to Fig. 3 and Fig. 4, Fig. 3 is an axonometric view of a battery cell 10 according to some embodiments of the present application, and Fig. 4 is an exploded view of the battery cell 10 shown in Fig. 3. The battery cell 10 may include a shell 1, an electrode assembly 2, and a pressure relief mechanism 3.

The shell 1 is configured to accommodate components, such as the electrode assembly 2 and an electrolyte. As an example, the shell 1 may include a shell body 11 and an end cover 12.

The shell body 11 may be a hollow structure with an opening formed at one end, or the shell body 11 may be a hollow structure with openings formed at two opposite ends. The shell body 11 may have a variety of shapes, such as a cylinder, and a prism. The shell body 11 may be made of various materials, such as copper, iron, aluminum, stainless steel, or aluminum alloy.

The end cover 12 is a component that closes the opening of the shell body 11 to isolate the internal environment of the battery cell 10 from the external environment. The end cover 12 and the shell body 11 jointly define an accommodation space for accommodating the electrode assembly 2, the electrolyte, and other components. The shape of the end cover 12 may match the shape of the shell 1. For example, the shell body 11 is of a cuboid structure, and the end cover 12 is of a rectangular platy structure matching the shell 1. For another example, the shell body 11 is of a cylindrical structure, and the end cover 12 is of a round platy structure matching the shell body 11. The end cover 12 may also be made of various materials, such as copper, iron, aluminum, steel, or aluminum alloy, and the material of the end cover 12 and the material of the shell body 11 may be the same or different.

In an embodiment where the shell body 11 is a hollow has an opening formed at one end, one end cover 12 may be provided correspondingly. In an embodiment where the shell body 11 has openings formed at both ends, two end covers 12 may be provided correspondingly. The two end covers 12 close the two openings of the shell body 11, respectively. The two end covers 12 and the shell body 11 jointly define an accommodation space.

The pressure relief mechanism 3 is a component that is arranged on the shell 1 and configured to release the internal pressure of the battery cell 10. When the internal pressure of the battery cell 10 reaches a threshold, the discharge medium in the battery cell 10 may be discharged through the pressure relief mechanism 3, to achieve the purpose of pressure relief. The threshold is designed to vary according to design requirements. The threshold may depend on the material of one or more of the positive electrode plate, the negative electrode plate, the electrolyte solution and the spacer in the battery cell 10. The pressure relief mechanism 3 may be arranged on the shell body 11, or may be arranged on the end cover 12. As an example, in Fig. 3 and Fig. 4, the pressure relief mechanism 3 is arranged on the shell body 11.

In some embodiments, the battery cell 10 may further include an electrode terminal 4. The electrode terminal 4 is arranged on the shell 1. The electrode terminal 4 is configured to be electrically connected to the tab 21 of the electrode assembly 2, to input or output electrical energy of the battery cell 10. The electrode terminal 4 may be arranged on the shell body 11 of the shell 1, or may be arranged on the end cover 12 of the shell 1. The electrode terminal 4 may be directly connected to the tab 21. For example, the electrode terminal 4 is directly welded to the tab 21. The electrode terminal 4 may also be indirectly connected to the tab 21. For example, the electrode terminal 4 is indirectly connected to the tab 21 through a current collecting member. The current collecting member may be a metal conductor, such as copper, iron, aluminum, steel, or aluminum alloy.

As an example, as shown in Fig. 4, the shell body 11 is of a hollow structure with openings formed at two opposite ends, and end covers 12 are arranged at two opposite ends of the shell body 11. Electrode terminals 4 are arranged on the end covers 12 at two ends of the shell body 11. Two opposite ends of the electrode assembly 2 are formed into tabs 21. The tab 21 at one end of the electrode assembly 2 is a positive tab 21, and the tab 21 at the other end of the electrode assembly 2 is a negative tab 21. The electrode terminal 4 on one end cover 12 is electrically connected to the positive tab 21, and the electrode terminal 4 on the other end cover 12 is electrically connected to the negative tab 21.

In some embodiments, the battery cell 10 may further include a first insulating member 5. The first insulating member 5 is wrapped around the electrode assembly 2. The first insulating member 5 is configured to insulate and isolate the electrode assembly 2 from the shell body 11. The first insulating member 5 is made of an insulating material, such as plastic or rubber.

In some embodiments, the battery cell 10 may further include a second insulating member 6. The second insulating member 6 is arranged corresponding to the end cover 12. The second insulating member 6 is arranged on one side, facing the electrode assembly 2, of the end cover 12. The second insulating member 6 is configured to insulate and isolate the end cover 12 from the electrode assembly 2. The second insulating member 6 is made of an insulating material, such as plastic or rubber.

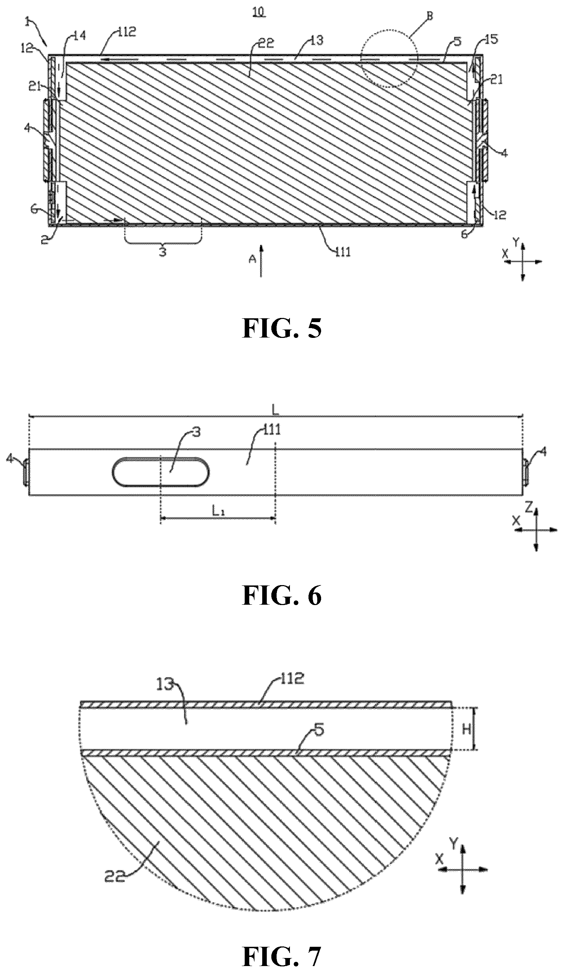

Referring to Fig. 5 and Fig. 6, Fig. 5 is a schematic diagram of a structure of the battery cell 10 shown in Fig. 4, and Fig. 6 is a view of the battery cell 10 shown in Fig. 5 from an A direction. Embodiments of the present application provide a battery cell 10. The battery cell 10 includes a shell 1, an electrode assembly 2 and a pressure relief mechanism 3. The electrode assembly 2 includes a main body part 22 and a tab 21, where the tab 21 is arranged on at least one end of the main body part 22 along a first direction X. The shell 1 includes a first wall part 111 and a second wall part 112. Along a second direction Y, the first wall part 111 and the second wall part 112 are arranged opposite to each other. The first wall part 111 is configured to support the main body part 22. A channel gap 13 is formed between the second wall part 112 and the main body part 22. The channel gap 13 is configured to connect spaces in the shell 1 that are located at both ends of the main body part 22 along the first direction X. The second direction Y intersects with the first direction X. The pressure relief mechanism 3 is arranged on the first wall part 111, and along the first direction X, a center of the pressure relief mechanism 3 deviates from a center of the first wall part 111.

The electrode assembly 2 may include a positive electrode plate, a negative electrode plate and a spacer. The electrode assembly 2 may be a wound type electrode assembly formed by winding the positive electrode plate, the spacer, and the negative electrode plate, or may be a stacked type electrode assembly 2 formed by stacking the positive electrode plate, the spacer, and the negative electrode plate. The main body part 22 may be a part, corresponding to a region of the electrode plate coated with an active material layer, of the electrode assembly 2. The electrode assembly 2 has a positive tab 21 and a negative tab 21. The positive tab 21 may be a part of the positive electrode plate that is not coated with a positive electrode active material layer, and the negative tab 21 may be a part of the negative electrode plate that is not coated with a negative electrode active material layer.

Along the first direction X, the tab 21 may be arranged on one end of the main body part 22. For example, the positive tab 21 and the negative tab 21 of the electrode assembly 2 are arranged at the same end of the main body part 22. Alternatively, the tabs 21 may be arranged on both ends of the main body part 22. For example, the positive tab 21 and the negative tab 21 are arranged at two opposite ends of the main body part 22, respectively.

The first wall part 111 and the second wall part 112 are two opposite wall parts of the shell 1. The first wall part 111 and the second wall part 112 may be two wall parts in the shell body 11 of the shell 1. Alternatively, at least one of the first wall part 111 and the second wall part 112 is the end cover 12 of the shell 1. For example, the shell body 11 is of a hollow structure with an opening at one end, one of the first wall part 111 and the second wall part 112 is an end cover 12, and the other is a wall part of the shell body 11 opposite to the end cover 12. For another example, the shell body 11 is of a hollow structure with openings at both ends, the first wall part 111 and the second wall part 112 are two end covers 12 in the shell 1, and the two end covers 12 are configured to close the two openings of the shell body 11, respectively.

The first wall part 111 is a wall part in the shell 1 that supports the main body part 22. The first wall part 111 bears the gravity of the main body part 22. The first direction X may be consistent with the gravity direction of the main body part 22. Along the first direction X, the first wall part 111 is located at the bottom of the main body part 22, and the second wall part 112 is located at the top of the main body part 22. The first wall part 111 may directly contact the main body part 22 to support the main body part 22. Alternatively, an intermediate member may be arranged between the first wall part 111 and the main body part 22, and the first wall part 111 supports the main body part 22 through the intermediate member.

The channel gap 13 is formed between the second wall part 112 and the main body part 22. Spaces in the shell 1 that are located at both ends of the main body part 22 along the first direction X are a first space 14 and a second space 15, respectively. The channel gap 13 connects the first space 14 and the second space 15. When the battery cell 10 is in thermal runaway, the discharge medium in one of the first space 14 and the second space 15 may flow to the other through the channel gap 13. The discharge medium includes, but is not limited to, an electrolyte solution, dissolved or split positive and negative electrode plates, separator fragments, and gases produced by reactions, etc. In an embodiment where the first insulating member 5 is wrapped around the outer side of the electrode assembly 2, the first insulating member 5 is wrapped around the main body part 22. The channel gap 13 may be a gap between the first insulating member 5 and the second wall part 112. The first wall part 111 may support the main body part 22 through a part of the first insulating member 5 located between the first wall part 111 and the main body part 22.

There may be one or more pressure relief mechanisms 3 on the first wall part 111. The pressure relief mechanism 3 and the first wall part 111 may be integrally formed. Alternatively, the pressure relief mechanism 3 and the first wall part 111 may be separately arranged, and the pressure relief mechanism 3 is installed on the first wall part 111. For example, the pressure relief mechanism 3 is a rupture disk, an explosion-proof valve, or a safety valve, etc. installed on the first wall part 111.

A center of the pressure relief mechanism 3 along the first direction X is a middle position of the pressure relief mechanism 3 in the first direction X. Along the first direction X, distances from the center of the pressure relief mechanism 3 to both ends of the pressure relief mechanism 3 are equal. A center of the first wall part 111 along the first direction X is a middle position of the first wall part 111 in the first direction X. Along the first direction X, distances from the center of the first wall part 111 to both ends of the first wall part 111 are equal. Along the first direction X, the center of the pressure relief mechanism 3 deviates from the center of the first wall part 111. It can be understood that, along the first direction X, there is a distance between the center of the pressure relief mechanism 3 and the center of the first wall part 111. As an example, along the first direction X, distances from the center of the pressure relief mechanism 3 to both ends of the main body part 22 are unequal. Along the first direction X, the pressure relief mechanism 3 is located between one end of the first wall part 111 close to the pressure relief mechanism 3 and the center of the first wall part 111.

Along a third direction Z, the pressure relief mechanism 3 may be centrally arranged on the first wall part 111. Along the third direction Z, the pressure relief mechanism 3 may alternatively be eccentrically arranged on the first wall part 111, that is, the pressure relief mechanism 3 is close to one edge of the first wall part 111 in the third direction Z, and away from the other edge of the first wall part 111 in the third direction Z.

An angle between the first direction X and the second direction Y may be an acute angle or a right angle.

As an example, in Fig. 5 and Fig. 6, the first direction X, the second direction Y, and the third direction Z are mutually perpendicular to each other. For example, the first direction X is a length direction of the shell 1, the second direction Y is a height direction of the shell 1, and the third direction Z is a width direction of the shell 1.

In the embodiments of the present application, the channel gap 13 is formed between the first wall part 111 and the main body part 22, and the center of the pressure relief mechanism 3 deviates from the center of the first wall part 111. When the battery cell 10 is in thermal runaway, along the first direction X, the discharge medium located at one end, close to the pressure relief mechanism 3, of the main body part 22 in the shell 1 may flow from the bottom of the main body part 22 to the pressure relief mechanism 3, and the discharge medium located at one end, away from the pressure relief mechanism 3, of the main body part 22 in the shell 1 may flow to the end, close to the pressure relief mechanism 3, of the main body part 22 through the channel gap 13 located at the top of the main body part 22, and then flows from the bottom of the main body part 22 to the pressure relief mechanism 3, which shortens a path of the discharge medium located at both ends of the main body part 22 flowing from the bottom of the main body part 22 to the pressure relief mechanism 3, so that the discharge medium at both ends of the main body part 22 can flow to the pressure relief mechanism 3 quickly, reducing the time for the discharge medium to reach the pressure relief mechanism 3, improving the timeliness of pressure relief of the battery cell 10, and thereby effectively improving the reliability of the battery cell 10.

As shown in Fig. 5, along the first direction X, the center of the pressure relief mechanism 3 deviates from the center of the first wall part 111, so that the first space 14 of the first space 14 and the second space 15 is closer to the pressure relief mechanism 3. When the battery cell 10 is in thermal runaway, the discharge medium located in the first space 14 may flow from the bottom of the main body part 22 to the pressure relief mechanism 3, and the discharge medium in the second space 15 may flow into the first space 14 through the channel gap 13, and then flows from the bottom of the main body part 22 to the pressure relief mechanism 3, shortening the time for the discharge medium to reach the pressure relief mechanism 3 and improving the timeliness of pressure relief of the battery cell 10. In Fig. 5, arrows inside the battery cell 10 indicate flow directions of the discharge medium.

In some embodiments, continuing to refer to Fig. 6, along the first direction X, the size of the shell 1 is L, and a distance between the center of the pressure relief mechanism 3 and the center of the first wall part 111 is L₁, satisfying: L₁/L ≥ 1/6.

L₁/L may be any point value among 1/6, 1/5, 1/4, 1/3, and 5/12, etc., or a range value between any two thereof.

The inventors conducted a plurality of groups of experiments. The battery cells 10 in different groups had the same L and different L₁. An explosion rate of the battery cell 10 in each group during thermal runaway was measured. Test results are shown in Table I below.

A method for measuring the explosion rate of the battery cell 10 in thermal runaway: A small heating film is arranged in the battery cell 10. The heating film is powered on to heat the battery cell 10 until thermal runaway of the battery cell 10 occurs, and whether the battery cell 10 explodes is observed. 1000 groups of battery cells are selected for each group of experiment to statisticize the explosion rate of the battery cells 10 based on explosion rate = number of explosions / total number * 100%.

**Table I**

| Serial number | L₁ (mm) | L (mm) | L₁/L | Explosion rate |
|---|---|---|---|---|
| 1 | 0 | 240 | 0 | 10% |
| 2 | 20 | 240 | 1/12 | 8% |
| 3 | 30 | 240 | 1/8 | 5% |
| 4 | 40 | 240 | 1/6 | 1% |
| 5 | 60 | 240 | 1/4 | 0.5% |
| 6 | 80 | 240 | 1/3 | 0.2% |
| 7 | 100 | 240 | 5/12 | 0.2% |

In this embodiment, L₁/L ≥ 1/6, so that the distance between the center of the pressure relief mechanism 3 and the center of the first wall part 111 is not too small, and therefore the pressure relief mechanism 3 is closer to one end of the main body part 22 along the first direction X, shortening the path of the discharge medium located at both ends of the main body part 22 flowing from the bottom of the main body part 22 to the pressure relief mechanism 3. It can be seen from Table I that when L₁/L ≥ 1/6, the explosion rate of the battery cell 10 during thermal runaway is low, and the timeliness of pressure release of the battery cell 10 during thermal runaway is better.

In some embodiments, L₁/L ≥ 1/3.

L₁/L may be any point value among 1/3, 2/5, 5/12, and 9/20, etc., or a range value between any two thereof.

In this embodiment, L₁/L ≥ 1/3, the distance between the center of the pressure relief mechanism 3 and the center of the first wall part 111 is further increased, so that the pressure relief mechanism 3 is closer to one end of the main body part 22 along the first direction X, further shortening the path of the discharge medium located at the both ends of the main body part 22 flowing from the bottom of the main body part 22 to the pressure relief mechanism 3. It can be seen from Table I that when L₁/L ≥ 1/3, the explosion rate of the battery cell 10 during thermal runaway is lower, and the timeliness of pressure release of the battery cell 10 during thermal runaway is better.

In some embodiments, along the first direction X, the size of the shell 1 is L, satisfying: L ≥ 200 mm.

L may be any point value among 200 mm, 220 mm, 240 mm, 260 mm, 280 mm, 300 mm, 320 mm, 340 mm, 360 mm, 380 mm, or 400 mm, etc., or a range value between any two thereof.

Taking the first direction X as the length direction of the shell 1 as an example, the size of the shell 1 in the first direction X is the length of the shell 1, that is, L is the length of the shell 1.

In this embodiment, L≥200 mm, so that the size of the shell 1 in the first direction X is long, which can satisfy high capacity requirements of the battery cell 10.

When the size of the shell 1 along the first direction X is greater than 200 mm, if the pressure relief mechanism 3 is centrally arranged on the first wall part 111 in the first direction X, that is, the distance between the center of the pressure relief mechanism 3 and the center of the first wall part 111 in the first direction X is zero, the path of the discharge medium located at both ends of the main body part 22 in the shell 1 flowing from the bottom of the main body part 22 to the pressure relief mechanism 3 may be very long, and it may be difficult to release the pressure in time through the pressure relief mechanism 3 when the battery cell 10 is in thermal runaway. Furthermore, if the pressure relief mechanism 3 and the first wall part 111 are eccentrically arranged in the first direction X, the path of the discharge medium at both ends of the main body part 22 flowing from the bottom of the main body part 22 to the pressure relief mechanism 3 can be effectively shortened, and the timeliness of pressure relief of the battery cell 10 can be improved. When L₁/L≥1/6, the timeliness of pressure relief of the battery cell 10 can be further improved.

In some embodiments, referring to Fig. 7, Fig. 7 is a partial enlarged view at a position B of the battery cell 10 shown in Fig. 5. Along the second direction Y, a minimum width of the channel gap 13 is H, satisfying: H ≥ 1 mm.

It can be understood that the second direction Y is consistent with a width direction of the channel gap 13.

H may be any point value among 1 mm, 2 mm, 3 mm, 4 mm, 5 mm, 6 mm, 7 mm, 8 mm, 9 mm, or 10 mm, etc., or a range value between any two thereof.

In an embodiment where the first insulating member 5 is not arranged on the outer side of the electrode assembly 2, the minimum width H of the channel gap 13 is a minimum distance along the second direction Y between an inner surface of the second wall part 112 and an outer surface of the main body part 22. As shown in Fig. 7, in an embodiment where the first insulating member 5 is wrapped around the outer side of the electrode assembly 2, the minimum width of the channel gap 13 is the minimum distance along the second direction Y between the inner surface of the second wall part 112 and the outer surface of the first insulating member 5.

In this embodiment, H ≥ 1 mm, so that the minimum width of the channel gap 13 is not too small, and the discharge medium located at one end of the main body part 22 can more easily flow to the other end of the main body part 22 through the channel gap 13.

In some embodiments, H ≤ 5 mm.

H may be any point value among 1 mm, 1.2 mm, 1.5 mm, 1.8 mm, 2 mm, 2.2 mm, 2.5 mm, 2.8 mm, 3 mm, 3.2 mm, 3.5 mm, 3.8 mm, 4 mm, 4.2 mm, 4.5 mm, 4.8 mm, or 5 mm, etc., or a range value between any two thereof.

The increase of the minimum width of the channel gap 13 may reduce the size of the main body part 22 in the second direction Y, so that the energy density of the battery cell 10 is reduced, and a shaking space of the electrode assembly 2 along the second direction Y in the shell 1 is increased, increasing the risk of failure of the battery cell 10 in a vibration environment. Furthermore, H ≤ 5 mm, so that the energy density of the battery cell 10 is high and the probability of failure of the battery cell 10 in the vibration environment is reduced.

In some embodiments, 2 mm ≤ H ≤ 3.5 mm.

H may be any point value among 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, or 3.5 mm, etc., or a range value between any two thereof.

In this embodiment, 2 mm ≤ H ≤ 3.5 mm, so that the discharge medium in the shell 1 can pass through the channel gap 13 more easily, the energy density of the battery cell 10 can also be improved, and the probability of failure of the battery cell 10 in the vibration environment can be further reduced.

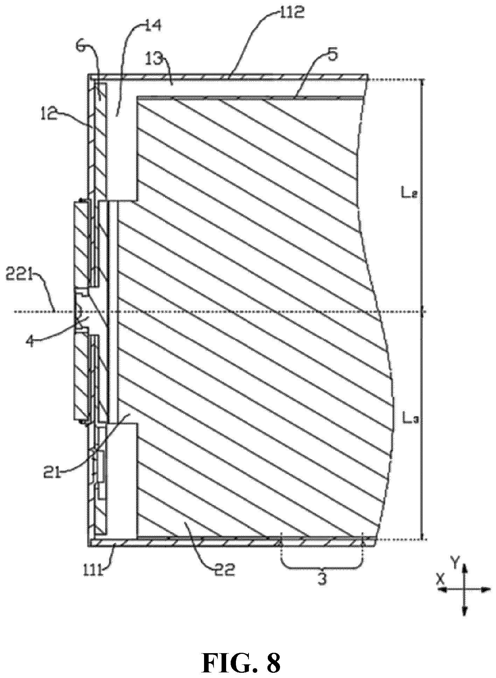

In some embodiments, referring to Fig. 8, Fig. 8 is a partial enlarged view of the battery cell 10 shown in Fig. 5. Along the second direction Y, spacing between a midplane 221 of the main body part 22 and the second wall part 112 is greater than spacing between the midplane 221 of the main body part 22 and the first wall part 111.

Along the second direction Y, the spacing between the midplane 221 of the main body part 22 and the second wall part 112 is first spacing L₂, and the spacing between the midplane 221 of the main body part 22 and the first wall part 111 is second spacing L₃, the first spacing L₂ being greater than the second spacing L₃. Along the second direction Y, a minimum distance between the midplane 221 and the inner surface of the second wall part 112 is the first spacing L₂. Along the second direction Y, a minimum distance between the midplane 221 and the inner surface of the first wall part 111 is the first spacing L₃.

The midplane 221 is perpendicular to the second direction Y. Along the second direction Y, distances from the midplane 221 to the two opposite surfaces of the main body part 22 are equal.

In this embodiment, the first spacing L₂ is greater than the second spacing L₃, so that the main body part 22 and the shell 1 are eccentrically arranged in the second direction Y, and therefore a wider channel gap 13 is formed between the second wall part 112 and the main body part 22, so as to facilitate quick flowing of the discharge medium in the channel gap 13.

In some embodiments, continuing to refer to Fig. 8, along the first direction X, the pressure relief mechanism 3 does not extend beyond any end of the main body part 22.

Along the first direction X, the main body part 22 has two opposite ends, and the pressure relief mechanism 3 does not extend beyond any one of both ends of the main body part 22. That is to say, the pressure relief mechanism 3 does not have a part that extends beyond any end of the main body part 22, and the pressure relief mechanism 3 is located between both ends of the main body part 22 along the first direction X. As an example, along the second direction Y, a projection of the main body part 22 completely covers the pressure relief mechanism 3.

In this embodiment, the pressure relief mechanism 3 does not extend beyond any end of the main body part 22 along the first direction X, so that there is still a certain distance between the main body part 22 and the end of the shell 1 along the first direction X, which is not easily affected by external factors, and improves the service life of the pressure relief mechanism 3. For example, when a force is applied to the end of the shell 1 along the first direction X, the force is not easy to affect the pressure relief mechanism 3.

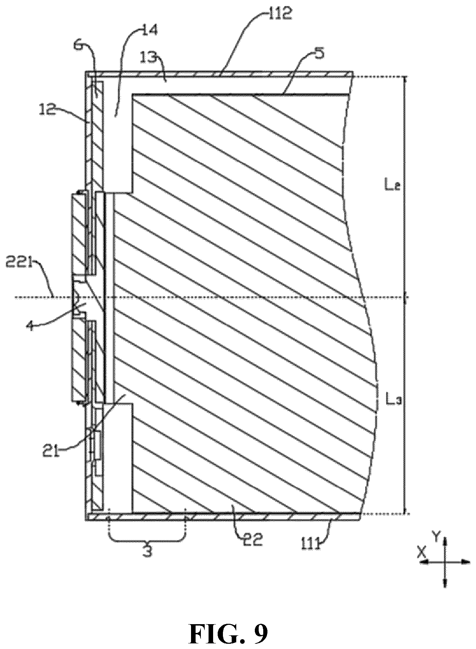

In some embodiments, referring to Fig. 9, Fig. 9 is a partial exploded view of a battery cell 10 according to some other embodiments of the present application. Along the first direction X, the pressure relief mechanism 3 at least partially extends beyond one end of the main body part 22.

Along the first direction X, the pressure relief mechanism 3 has a part that extends beyond one end of the main body part 22. The pressure relief mechanism 3 may entirely extend beyond one end of the main body part 22. Alternatively, the pressure relief mechanism 3 may only partially extend beyond one end of the main body part 22. The part of the pressure relief mechanism 3 that extends beyond one end of the main body part 22 along the first direction X does not overlap with the projection of the main body part 22 in the second direction Y.

The part of the pressure relief mechanism 3 that extends beyond the main body part 22 is not blocked by the main body part 22, so that the discharge medium located at both ends of the main body part 22 can reach the pressure relief mechanism 3 more quickly, further shortening the time for the discharge medium to reach the pressure relief mechanism 3.

In some embodiments, continuing to refer to Fig. 4 to Fig. 9, only one pressure relief mechanism 3 is arranged on the first wall part 111.

In the embodiment shown in Fig. 8, along the first direction X, the pressure relief mechanism 3 does not extend beyond any end of the main body part 22, and spacing between the end of the main body part 22 corresponding to the first space 14 and the pressure relief mechanism 3 is less than spacing between the end of the main body part 22 corresponding to the second space 15 and the pressure relief mechanism 3.

Along the first direction X, a distance between closest parts of one end of the main body part 22 corresponding to the first space 14 and the pressure relief mechanism 3 is the spacing between one end of the main body part 22 corresponding to the first space 14 and the pressure relief mechanism 3. Along the first direction X, a distance between closest parts of one end of the main body part 22 corresponding to the second space 15 and the pressure relief mechanism 3 is the spacing between one end of the main body part 22 corresponding to the second space 15 and the pressure relief mechanism 3.

In the embodiment shown in Fig. 9, along the first direction X, the pressure relief mechanism 3 at least partially extends beyond one end of the main body part 22, and the part of the pressure relief mechanism 3 extending beyond the main body part 22 faces the first space 14 along the second direction Y.

In this embodiment, only one pressure relief mechanism 3 is arranged on the first wall part 111, which simplifies the structure of the battery cell 10 and reduces the production cost.

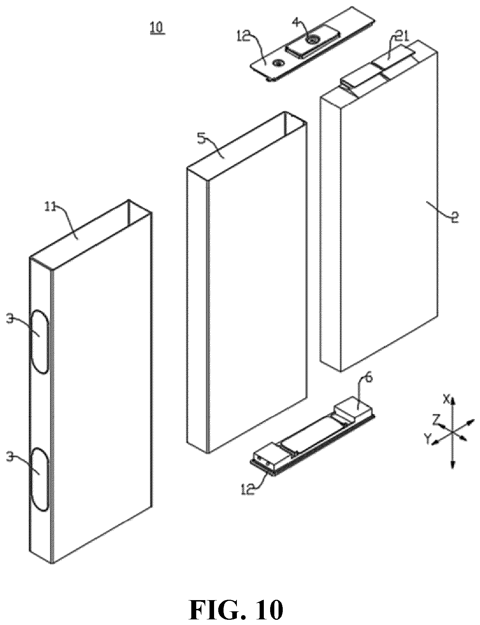

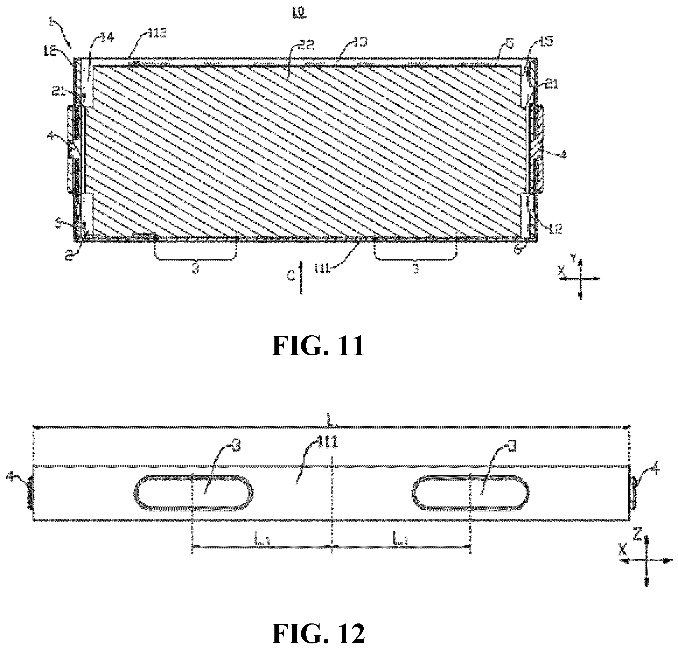

In some embodiments, referring to Fig. 10 to Fig. 12, Fig. 10 is an exploded view of a battery cell 10 according to some other embodiments of the present application, Fig. 11 is a schematic diagram of a structure of the battery cell 10 shown in Fig. 10, and Fig. 12 is a view of the battery cell 10 shown in Fig. 11 from a C direction. A plurality of pressure relief mechanisms 3 are arranged on the first wall part 111.

It can be understood that, along the first direction X, centers of the plurality of pressure relief mechanisms 3 all deviate from a center of the first wall part 111. There may be two, three, four, five, six or more pressure relief mechanism 3 on the first wall part 111.

The plurality of pressure relief mechanisms 3 may be arranged at intervals along the first direction X, or the plurality of pressure relief mechanisms 3 may be arranged at intervals along the third direction Z, or a part of the plurality of pressure relief mechanisms 3 may be arranged at intervals along the first direction X, and the other part of the pressure relief mechanisms 3 may be arranged at intervals along the third direction Z. The first direction X, the second direction Y, and the third direction Z may be mutually perpendicular to each other.

The battery cell 10 may release the internal pressure of the battery cell 10 through the plurality of pressure relief mechanisms 3, improving a pressure relief capacity of the battery cell 10. When a part of the pressure relief mechanisms 3 in the battery cell 10 is blocked by obstacles and cannot relieve the pressure, the battery cell 10 may relieve the pressure through the other pressure relief mechanisms 3 to improve the reliability of the battery cell 10.

In some embodiments, continuing to refer to Fig. 11 and Fig. 12, two pressure relief mechanism 3 are arranged on the first wall part 111, and along the first direction X, the two pressure relief mechanisms 3 are located on two sides of the center of the first wall part 111.

It can be understood that along the first direction X, the center of the first wall part 111 is located between the two pressure relief mechanisms 3. Along the first direction X, distances from centers of the two pressure relief mechanisms 3 to the center of the first wall part 111 may be equal or unequal.

In an embodiment where the pressure relief mechanism 3 at least partially extends beyond one end of the main body part 22 along the first direction X, along the first direction X, one pressure relief mechanism 3 may be at least partially extend beyond one end of the main body part 22, and the other pressure relief mechanism 3 may be at least partially extend beyond the other end of the main body part 22. As shown in Fig. 11 and Fig. 12, in an embodiment where the pressure relief mechanism 3 does not extend beyond any end of the main body part 22 along the first direction X, along the first direction X, the two pressure relief mechanisms 3 are both located between both ends of the main body part 22.

In this embodiment, the two pressure relief mechanisms 3 are arranged on the first wall part 111. The two pressure relief mechanisms 3 are located on both sides of the center of the first wall part 111 along the first direction X, respectively. The discharge medium located at one end of the main body part 22 may flow to the closer pressure relief mechanism 3, or may flow to the farther pressure relief mechanism 3 through the channel gap 13. Similarly, the discharge medium located at the other end of the main body part 22 may flow to the closer pressure relief mechanism 3, or may flow to the farther pressure relief mechanism 3 through the channel gap 13. Therefore, the time for the discharge medium at both ends of the main body part 22 to reach the pressure relief mechanism 3 can be further shortened, and the timeliness of pressure relief of the battery cell 10 can be further improved.

In some embodiments, continuing to refer to Fig. 4, Fig. 5, Fig. 10 and Fig. 11, the shell 1 includes a shell body 11 and an end cover 12. An opening is formed at at least one end of the shell body 11 along the first direction X. The end cover 12 corresponds to the opening one by one, and the end cover 12 closes the opening. The first wall part 111 and the second wall part 112 are two opposite wall parts of the shell body 11.

An opening may be formed at one end of the shell body 11 along the first direction X. Alternatively, openings are formed at both ends of the shell body 11 along the first direction X.

The shell body 11 may be in a prism shape, such as a quadrangular prism shape, or a hexagonal prism shape. The quadrangular shell body may be a cuboid shell body, or a cube shell body, etc. The end cover 12 may be connected to the shell body 11 in various ways. For example, the end cover 12 may be connected to the shell body 11 by welding or winding, to close the opening of the shell body 11.

When assembling the battery cell 10, the electrode assembly 2 may be installed in the shell body 11, and then the end cover 12 closes the opening of the shell body 11, so the battery cell 10 is convenient and fast to assemble. Since the first wall part 111 is formed on the shell body 11, so that the pressure relief mechanism 3 is located on the shell body 11, reducing the impact of the discharge medium discharged from the battery cell 10 when pressure relief is performed through the pressure relief mechanism 3 on components on the outer side of the end cover 12. The components may be a busbar component, and a detection component, etc. electrically connected to the electrode terminal 4 on the end cover 12. In an embodiment where the pressure relief mechanism 3 does not extend beyond any end of the main body part 22 along the first direction X, since the pressure relief mechanism 3 is not too close to the opening of the shell body 11 along the first direction X, the pressure relief mechanism 3 is not easily affected by a connection between the end cover 12 and the shell body 11. Taking welding of the end cover 12 and the shell body 11 as an example, the pressure relief mechanism 3 is not easily affected by a welding stress generated by welding of the end cover 12 and the shell body 11.

In some embodiments, continuing to refer to Fig. 4, Fig. 5, Fig. 10 and Fig. 11, openings are formed at both ends of the shell body 11 along the first direction X.

It can be understood that there are two end covers 12 in the shell 1, and the two end covers 12 close the two openings of the shell body 11, respectively.

As an example, along the first direction X, tabs 21 are arranged on both ends of the main body part 22, and the tabs 21 at both ends of the main body part 22 have opposite polarities. Electrode terminals 4 are arranged on two end covers 12 of the shell 1. Along the first direction X, the electrode terminal 4 on one end cover 12 is electrically connected to the tab 21 at one end of the main body part 22, and the electrode terminal 4 on the other end cover 12 is electrically connected to the tab 21 at the other end of the main body part 22.

When assembling the battery cell 10, the electrode assembly 2 may enter the shell body 11 from any end of the shell body 11, which can effectively improve the assembly efficiency of the battery cell 10.

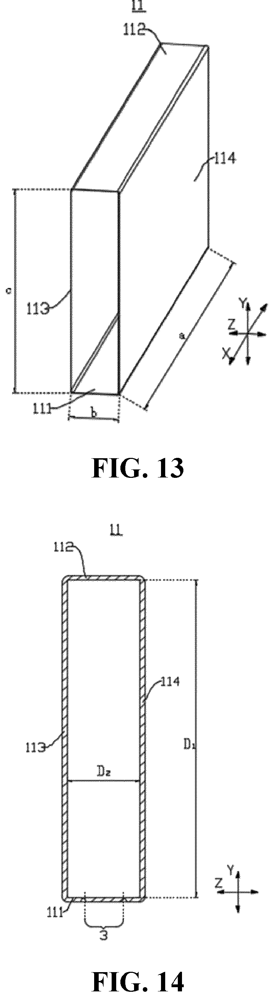

In some embodiments, referring to Fig. 13 and Fig. 14, FIG. 13 is an axonometric view of a shell body 11 according to some embodiments of the present application, and Fig. 14 is a schematic diagram of a structure of a shell body 11 shown in Fig. 13. The shell body 11 includes a third wall part 113 and a fourth wall part 114. The third wall part 113 and the fourth wall part 114 are arranged opposite to each other along a third direction Z. A first wall part 111, the third wall part 113, a second wall part 112 and the fourth wall part 114 are sequentially connected end to end, and the third direction Z intersects with a second direction Y

The shell body 11 may only be composed of the first wall part 111, the second wall part 112, the third wall part 113 and the fourth wall part 114. The shell body 11 is of a hollow structure with openings formed at both ends along a first direction X. The shell body 11 may further include a fifth wall part (not shown in the figure) connected to the first wall part 111, the second wall part 112, the third wall part 113 and the fourth wall part 114. The fifth wall part is located at one end of the shell body 11 along the first direction X. Along the first direction X, an opening is formed at one end of the shell body 11 opposite to the fifth wall part. It can be understood that the shell body 11 is of a hollow structure with an opening formed at one end along the first direction X.

The second direction Y may be perpendicular to the first wall part 111 and the second wall part 112, and the third direction Z may be perpendicular to the third wall part 113 and the fourth wall part 114. An angle between the third direction Z and the second direction Y may be an acute angle or a right angle. If the third direction Z and the second direction Y are arranged to have an acute angle therebetween, the first wall part 111, the second wall part 112, the third wall part 113 and the fourth wall part 114 may be located on four sides of a parallelogram, respectively. As shown in Fig. 13, if the third direction Z and the second direction Y are arranged to have a right angle therebetween, that is, the third direction Z is perpendicular to the second direction Y, two adjacent wall parts of the first wall part 111, the second wall part 112, the third wall part 113 and the fourth wall part 114 are perpendicular, and the first wall part 111, the second wall part 112, the third wall part 113 and the fourth wall part 114 may be located on four sides of a rectangle, respectively.

In this embodiment, the shell body 11 including the first wall part 111, the second wall part 112, the third wall part 113 and the fourth wall part 114 is substantially in the shape of a quadrangular prism, which is simple in structure and easy to form.

In some embodiments, continuing to refer to Fig. 14, along the second direction Y, spacing between the first wall part 111 and the second wall part 112 is D₁. Along the third direction Z, spacing between the third wall part 113 and the fourth wall part 114 is D₂, where D₂ < D₁.

Along the second direction Y, a minimum distance between an inner surface of the first wall part 111 and an inner surface of the second wall part 112 is the spacing between the first wall part 111 and the second wall part 112. Along the third direction Z, a minimum distance between an inner surface of the third wall part 113 and an inner surface of the fourth wall part 114 is the spacing between the third wall part 113 and the fourth wall part 114.

Along the second direction Y, the spacing between the first wall part 111 and the second wall part 112 is the distance between the inner surface of the first wall part 111 and the inner surface of the second wall part 112. Along the third direction Z, the spacing between the third wall part 113 and the fourth wall part 114 is the distance between the inner surface of the third wall part 113 and the inner surface of the fourth wall part 114.

In this embodiment, D₂<D₁. When the electrode assembly 2 expands, the first wall part 111 and the second wall part 112 are less affected by the electrode assembly 2 than the third wall part 113 and the fourth wall part 114. Since the pressure relief mechanism 3 is located on the first wall part 111, the risk of obstruction or damage to the pressure relief mechanism 3 caused by the expansion of the electrode assembly 2 can be reduced.

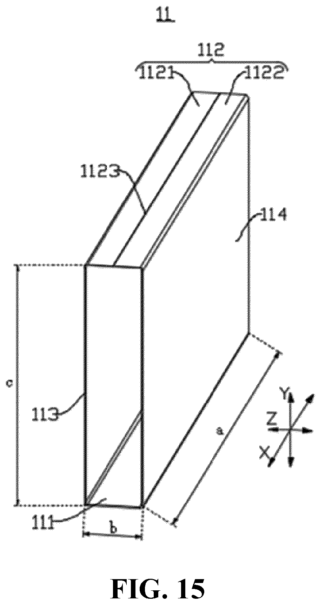

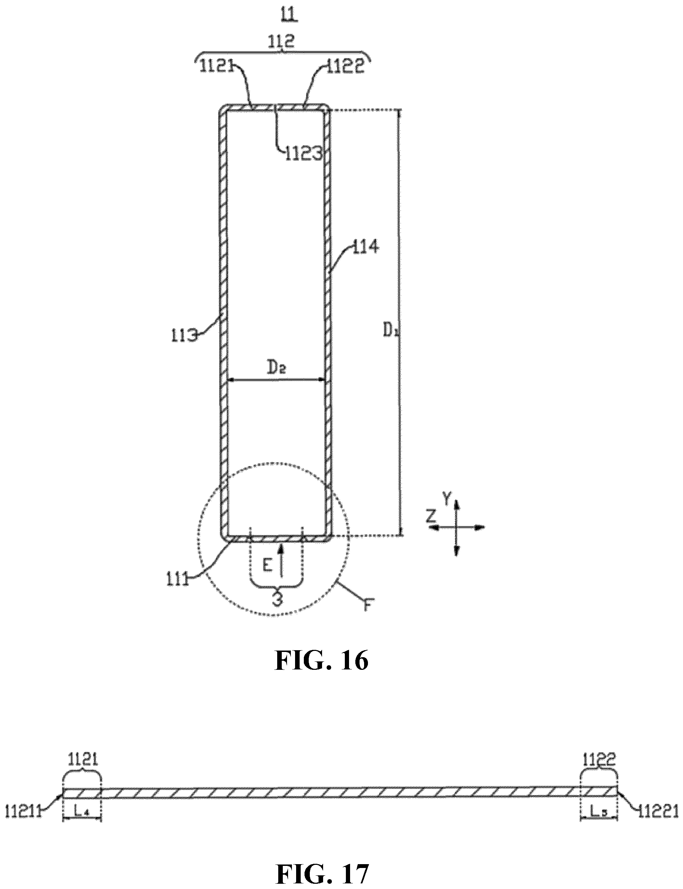

In some embodiments, referring to Fig. 15 to Fig. 17, Fig. 15 is an axonometric view of a shell body 11 according to some other embodiments of the present application, Fig. 16 is a schematic diagram of a structure of the shell body 11 shown in Fig. 15, and Fig. 17 is a schematic diagram of a structure of the shell body 11 shown in Fig. 15 after unfolding. The shell body 11 is formed by bending a plate, and front and rear end parts of the plate are connected to each other along the circumferential direction of the opening.

Taking the shell body 11 including a first wall part 111, a third wall part 113, a second wall part 112, and a fourth wall part 114 sequentially connected end to end as an example, the first wall part 111, the third wall part 113, the second wall part 112 and the fourth wall part 114 are sequentially arranged the circumference of the opening.

Along the circumference of the opening, the front and rear end parts of the plate are a first end part 1121 and a second end part 1122, respectively. As shown in Fig. 17, before the shell body 11 is formed, the plate has two opposite end faces, which are a first end face 11211 and a second end face 11221, respectively. A part of the plate in a region where the plate deviates from the first end face 11211 along a direction close to the second end face 11221 by a first preset distance L₄ is the first end part 1121 of the plate, and the length of the first end 1121 is equal to the first preset distance L₄. A part of the plate in a region where the plate deviates from the second end face 11221 along a direction close to the first end face 11211 by a second preset distance L₅ is the second end part 1122 of the plate. The length of the second end part 1122 is equal to the second preset distance L₅. The first preset distance L₄ and the second preset distance L₅may be equal or unequal.

The two end parts of the plate (the first end part 1121 and the second end part 1122) may be connected in various ways, such as welding, bonding, or hot-melt connection. A connection position 1123 of the two end parts may be located on one wall part of the shell body 11. For example, the connection position 1123 of the two end parts is located on the first wall part 111, the second wall part 112, the third wall part 113, or the fourth wall part 114. Alternatively, the connection position 1123 of the two end parts may be located at an intersection of two adjacent wall parts of the shell body 11, where the intersection position is a corner position of the shell body 11.

When forming the shell body 11, it is only necessary to bend the plate and connect the two end parts of the plate to each other. The forming mode of the shell body 11 is simple, and the difficulty of forming the shell body 11 can be effectively reduced. During the forming process, the shell body 11 is not easily subjected to a large impact force, and the shell body 11 is not easy to be damaged, improving forming efficiency of the shell body 11.

In some embodiments, continuing to refer to Fig. 15 to Fig. 17, the connection position 1123 of the two end parts is located on the second wall part 112.

As an example, front and rear end parts of the plate jointly form the second wall part 112, that is, a part of the second wall part 112 is the first end part 1121, and another part of the second wall part 112 is the second end part 1122. End faces of the two end parts are connected to each other, and a junction of the end faces of the two end parts forms the connection position 1123. That is, the first end face 11211 of the first end part 1121 is connected to the second end face 11221 of the second end part 1122.

Since the pressure relief mechanism 3 is located at the first wall part 111, and the connection positions 1123 of the two end parts is located on the second wall part 112, the connection positions 1123 and the pressure relief mechanism 3 are located on two opposite wall parts of the shell body 11, reducing the influence of the connection positions 1123 on the pressure relief mechanism 3, and improving the reliability of the pressure relief mechanism 3. In an embodiment where D₂<D₁, when the electrode assembly 2 expands, the first wall part 111 and the second wall part 112 are less affected by the electrode assembly 2 than the third wall part 113 and the fourth wall part 114, and deformation amounts of the first wall part 111 and the second wall part 112 are smaller than deformation amounts of the third wall part 113 and the fourth wall part 114. Since the connection position 1123 is located at the second wall part 112, the influence of the expansion of the electrode assembly 2 on the connection position 1123 can be reduced, and the risk of the shell body 11 being damaged from the connection position 1123 due to the expansion of the electrode assembly 2 can be reduced.

In some embodiments, the two end parts are connected by welding.

In this embodiment, a welding position of the two end parts is the connection position 1123 of the two end parts.

As an example, end faces of the two end parts are connected by welding, that is, the first end face 11211 and the second end face 11221 are connected by welding. During welding, welding may be performed along a weld formed between the first end face 11211 and the second end face 11221.

In this embodiment, the two end parts are connected by welding, so that the two end parts have good connection strength, and the two end parts are firmer after being connected. In an embodiment where D₂<D₁, when the electrode assembly 2 expands, deformation amounts of the first wall part 111 and the second wall part 112 are smaller than deformation amounts of the third wall part 113 and the fourth wall part 114. If a welding position is located at the second wall part 112, the influence of the expansion of the electrode assembly 2 on the welding position can be reduced, and the risk of the shell body 11 being damaged from the welding position due to the expansion of the electrode assembly 2 can be reduced.

In some embodiments, continuing to refer to Fig. 13 and Fig. 15, the shell body is 11 a cuboid shell body, and the first direction X is the length direction 11 of the shell body.

As an example, openings are formed at two ends of the shell body 11 in the first direction X. The shell body 11 includes the first wall part 111, the third wall part 113, the second wall part 112 and the fourth wall part 114 which are sequentially connected end to end. The first wall part 111 and the second wall part 112 are arranged opposite to each other along the second direction Y The third wall part 113 and the fourth wall part 114 are arranged opposite to each other along the third direction Z. The second direction Y is the height direction of the shell body 11. The third direction Z is the width direction of the shell body 11.

In this embodiment, the shell body 11 is a cuboid shell body, which is simple in structure and easy to form. Since the first direction X is the length direction of the shell body 11, if the pressure relief mechanism 3 is centrally arranged on the first wall part 111 in the length direction of the shell body 11, a path of the discharge medium located at both ends of the main body part 22 in the shell 1 flowing from the bottom of the main body part 22 to the pressure relief mechanism 3 may be very long, and it may be difficult to release the pressure in time through the pressure relief mechanism 3 when the battery cell 10 is in thermal runaway. Furthermore, if the pressure relief mechanism 3 and the first wall part 111 are eccentrically arranged in the length direction of the shell body 11, the path of the discharge medium at both ends of the main body part 22 flowing from the bottom of the main body part 22 to the pressure relief mechanism 3 can be effectively shortened, and the timeliness of pressure relief of the battery cell 10 can be improved.

In some embodiments, continuing to refer to Fig. 13 and Fig. 15, the length of the shell body 11 is a, the width of the shell body 11 is b, and the height of the shell body 11 is c, where b ≤ c ≤ a/1.5.

It can be understood that a/c ≥ 1.5, and a/c may be any point value among 1.5, 2, 3, 4, or 5, etc., or a range value between any two thereof. It may be b<c or b = c. In the embodiment shown in Fig. 13 and Fig. 15, b < c.

In this embodiment, a/c ≥ 1.5, the shell body 11 is in the shape of a long strip, which can satisfy high capacity requirements of the battery cell 10. In an embodiment where the shell body 11 is formed by bending a plate, since the shell body 11 is in the shape of the long strip, the shell body 11 formed by bending the plate is easier to form than the shell body 11 formed by traditional stamping or drawing, and has higher forming efficiency and finished product quality rate, especially for thin-walled shell bodies with a wall thickness not more than 0.6 mm.

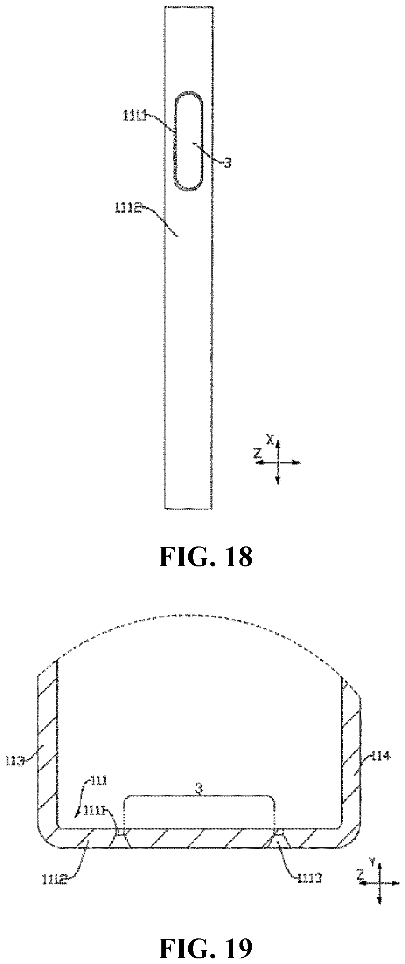

In some embodiments, referring to Fig. 18 and Fig. 19, Fig. 18 is a view of the shell body 11 shown in Fig. 16 from an E direction, and Fig. 19 is a partial enlarged view at a position F of the shell body 11 shown in Fig. 16. The pressure relief mechanism 3 and the first wall part 111 are integrally formed. In this way, the reliability of the pressure relief mechanism 3 is higher, a connection process for the pressure relief mechanism 3 and the first wall part 111 is saved, and the production cost of the battery cell 10 can be reduced.

In some embodiments, continuing to refer to Fig. 18 and Fig. 19, the first wall part 111 includes a weak region 1111 and a non-weak region 1112. The weak region 1111 is arranged along an edge of the pressure relief mechanism 3 and connects the pressure relief mechanism 3 and the non-weak region 1112, and the weak region 1111 is configured to crack when the pressure in the battery cell 10 is released.

The weak region 1111, the non-weak region 1112 and the pressure relief mechanism 3 are integrally formed. The non-weak region 1112 is a main region of the first wall part 111, and the weak region 1111 is a region of the first wall part 111 that is weaker than the non-weak region 1112. The strength of the non-weak region 1112 is greater than the strength of the weak region 1111. The weak region 1111 may be a part of the first wall part 111 that is weakened. For example, the first wall part 111 is partially annealed to reduce the strength of such region to form the weak region 1111. For another example, a groove is provided in the first wall part 111 to form the weak region 1111 in the region of the groove.

As an example, the shell body 11 includes the third wall part 113 and the fourth wall part 114. The third wall part 113 and the fourth wall part 114 are arranged opposite to each other along the third direction Z, and the non-weak region 1112 of the first wall part 111 connects the third wall part 113 and the fourth wall part 114.

When the pressure in the battery cell 10 is released, the first wall part 111 may crack at the weak region 1111, and the pressure relief mechanism 3 may be opened with the weak region 1111 as a boundary, which provides a larger pressure relief area, so that the discharge medium in the shell 1 can be discharged quickly.

In some embodiments, continuing to refer to Fig. 19, the first wall part 111 is provided with a score groove 1113, and the first wall part 111 forms a weak region 1111 in a region where the score groove 1113 is provided.

The score groove 1113 may be formed in various ways, such as stamping, milling, or laser etching. An extension direction of the score groove 1113 is the same as an extension direction of the weak region 1111. The score groove 1113 may extend along a closed track. Alternatively, the score groove 1113 may extend along a non-closed track. For example, the score groove 1113 is a groove extending along an arc-shaped, U-shaped or other track. The score groove 1113 may be provided in the inner surface and/or an outer surface of the first wall part 111. As an example, in the embodiment shown in Fig. 19, the score groove 1113 is provided in the outer surface of the first wall part 111.

The bottom wall of the score groove 1113 is the weak region 1111, and the thickness of the weak region 1111 is less than the thickness of the non-weak region 1112.

In this embodiment, the weak region 1111 is formed by providing the score groove 1113 in the first wall part 111, so that an integrated pressure relief mechanism 3 is formed, and the pressure relief mechanism 3 has a simple molding method and low production cost.

In some embodiments, the score groove 1113 is a groove extending along a closed track.

It can be understood that the weak region 1111 extends along the closed track, and the weak region 1111 defines the pressure relief mechanism 3.

The score groove 1113 is an annular groove, where the annular groove may be a rectangular annular groove or a circular annular groove. The rectangular annular groove is a groove extending along a rectangular track, and the circular annular groove is a groove extending along a circular track. In the embodiment shown in Fig. 18 and Fig. 19, the score groove 1113 is substantially a rectangular annular groove.

In a pressure relief process, the pressure relief mechanism 3 may be opened in the way of separating from the non-weak region 1112 after the first wall part 111 cracks along the score groove 1113, which increases the pressure relief area, and improves a pressure relief rate of the battery cell 10.

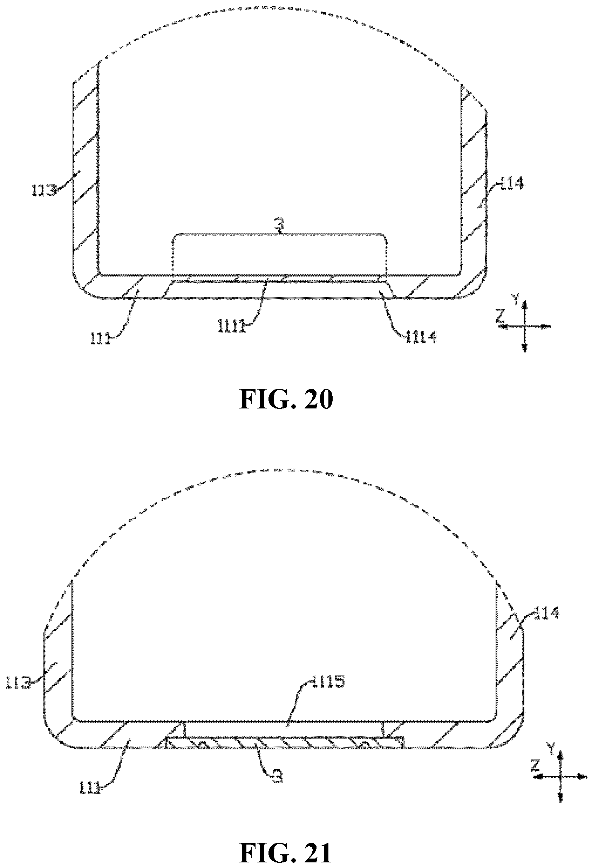

In some embodiments, referring to Fig. 20, Fig. 20 is a partial exploded view of a shell body 11 according to some other embodiments of the present application. A first wall part 111 is provided with a recessed groove 1114. A weak region 1111 is formed in a region of the first wall part 111 where the recessed groove 1114 is provided. The weak region 1111 forms a pressure relief mechanism 3, so that the pressure relief mechanism 3 and the first wall part 111 are integrally formed.

The pressure relief mechanism 3 is the bottom wall of the recessed groove 1114. The recessed groove 1114 may be a groove of various shapes, such as an elliptical groove, a circular groove, or a rectangular groove. The elliptical groove is a groove with an elliptical cross section. The circular groove is a groove with a circular cross section. The rectangular groove is a groove with a rectangular cross section. The cross section referred to here is perpendicular to the depth direction of the recessed groove 1114. In Fig. 20, the depth direction of the recessed groove 1114 is consistent with the second direction Y.

In some embodiments, referring to Fig. 21, Fig. 21 is a partial exploded view of a shell body 11 according to still some embodiments of the present application. A pressure relief mechanism 3 and a first wall part 111 are separately arranged, and the pressure relief mechanism 3 is installed on the first wall part 111.

The pressure relief mechanism 3 and the shell 1 are two separate components, which are separately formed and then installed together. The pressure relief mechanism 3 may be a component, such as a rupture disk, an explosion-proof valve, or a safety valve. The pressure relief mechanism 3 may be installed on the first wall part 111 by bonding, welding, etc. The first wall part 111 is provided with a pressure relief hole 1115, and the pressure relief mechanism 3 is installed on the pressure relief hole 1115. When the internal pressure of the battery cell 10 reaches a threshold, the pressure relief mechanism 3 opens at least part of the pressure relief hole 1115, and a discharge medium in the battery cell 10 is discharged through the pressure relief hole 1115 to release the pressure in the battery cell 10.

As shown in Fig. 21, taking the pressure relief mechanism 3 that is a rupture disk as an example, the rupture disk is a disk body whose strength in at least part of the disk is less than the strength of the first wall part 111. The rupture disk covers the pressure relief hole 1115, and the rupture disk is welded to the first wall part 111. When the internal pressure of the battery cell 10 reaches the threshold, the rupture disk is at least partially destroyed, and then at least part of the pressure relief hole 1115 is opened to release the pressure in the battery cell 10.

In this embodiment, the pressure relief mechanism 3 is a component independent of the shell 1. The pressure relief mechanism 3 and the shell 1 may be separately produced and then assembled, which is low in production difficulty and high in efficiency.

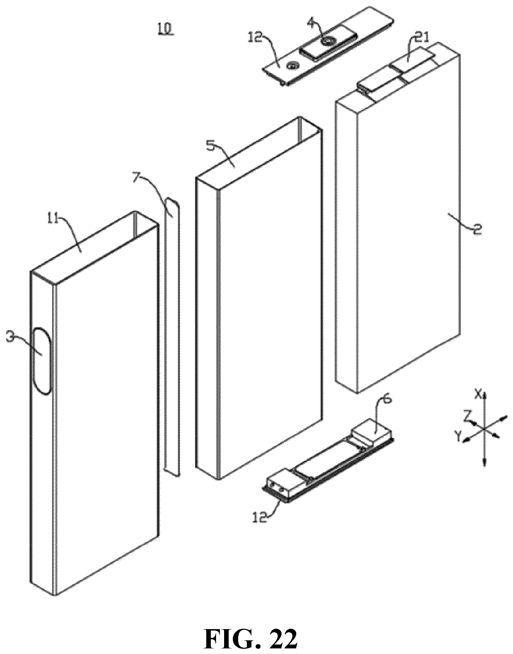

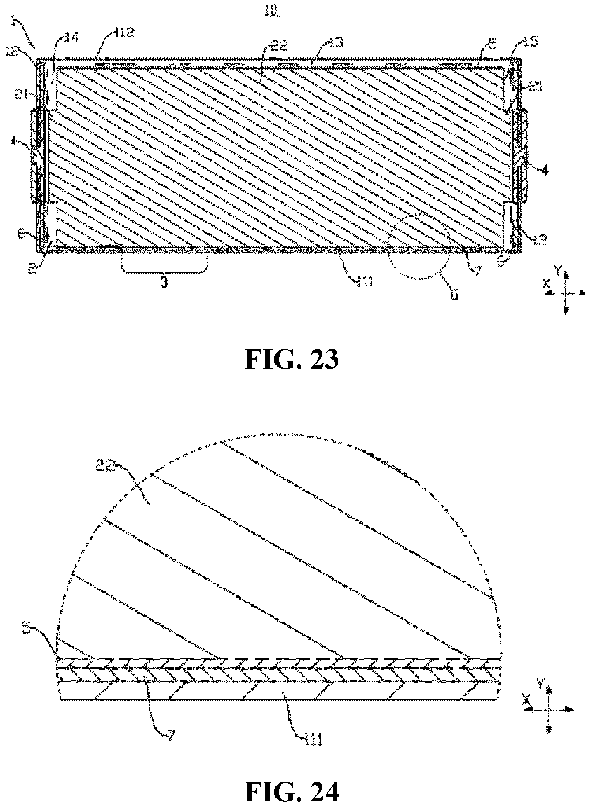

In some embodiments, referring to Fig. 22 to Fig. 24, Fig. 22 is an exploded view of a battery cell 10 according to still some embodiments of the present application, Fig. 23 is a schematic diagram of a structure of the battery cell 10 shown in Fig. 22, and Fig. 24 is a partial enlarged view at a position G of the battery cell 10 shown in Fig. 23. The battery cell 10 further includes a supporting member 7. Along the second direction Y, the supporting member 7 is arranged between the main body part 22 and the first wall part 111, and the supporting member 7 is configured to support the main body part 22.

The supporting member 7 is a component arranged between the main body part 22 and the first wall part 111 and supports the main body part 22. The supporting member 7 is configured to bear the gravity of the main body part 22. It can be understood that the first wall part 111 supports the main body part 22 via the supporting member 7. The supporting member 7 may be a plate-shaped member arranged between the main body part 22 and the first wall part 111. The supporting member 7 is located on one side of the first wall part 111 facing the electrode assembly 2, and the gravity of the main body part 22 may be transferred to the first wall part 111 through the supporting member 7.

The supporting member 7 may directly support the main body part 22, that is, the supporting member 7 is located at the bottom of the main body part 22 and is in direct contact with the main body part 22. Alternatively, the supporting member 7 may indirectly support the main body part 22, that is, the supporting member 7 is located at the bottom of the main body part 22, and other components are arranged between the supporting member 7 and the main body part 22. In order to reduce the influence of the supporting member 7 on the pressure relief mechanism, an avoidance groove may be provided in a region, corresponding to the pressure relief mechanism 3, on one side of the supporting member 7 facing the first wall part 111.

As an example, as shown in Fig. 24, the battery cell 10 further includes a first insulating member 5. The first insulating member 5 is wrapped around the main body part 22. Along the second direction Y, the first insulating member 5 is partially located between the main body part 22 and the supporting member 7, and the supporting member 7 indirectly supports the main body part 22 through the first insulating member 5. Along the second direction Y, a projection of the supporting member 7 completely covers the pressure relief mechanism 3.

In this embodiment, the supporting member 7 can bear the gravity of the main body part 22, and can separate the first wall part 111 from the main body part 22, reducing the influence of the main body part 22 on the pressure relief mechanism 3 and improving the life of the pressure relief mechanism 3.

In some embodiments, the battery cell 10 further includes a first insulating member 5. The first insulating member 5 is wrapped around the main body part 22, and the first insulating member 5 is configured to insulate and isolate the main body part 22 from the shell 1. Along the second direction Y, a channel gap is 13 formed between the first insulating member 5 and the second wall part 112.

The first insulating member 5 is wrapped around the main body part 22 around a central line extending along the first direction X. Along the second direction Y, the first insulating member 5 has a part located between the main body part 22 and the second wall part 112, and the channel gap 13 is formed between the part and the second wall part 112.

In this embodiment, the first insulating member 5 functions to insulate and isolate the main body part 22 from the shell 1, achieving insulation between the main body part 22 and the shell 1, and reducing the probability of a short circuit of the battery cell 10.

In some embodiments, the electrode assembly 2 is a wound type electrode assembly, and a winding centerline of the electrode assembly 2 extends along the first direction X.

As an example, the electrode assembly 2 includes a positive electrode plate, a negative electrode plate, and a spacer, where the positive electrode plate, the negative electrode plate, and the spacer are wound around a winding centerline to form the wound type electrode assembly.

When the battery cell 10 is in thermal runaway, a discharge medium generated by the electrode assembly 2 is easily accumulated at both ends of the main body part 22 of the electrode assembly 2 (both ends of the main body part 22 in an extension direction of the winding centerline). If the discharge medium cannot be discharged quickly, there is a risk of fire or explosion of the battery cell 10. However, by eccentrically arranging the pressure relief mechanism 3 and the first wall part 111 in the first direction X, the time for the discharge medium at both ends of the main body part 22 to reach the pressure relief mechanism 3 can be shortened, to quickly discharge the discharge medium.

In some embodiments, the electrode assembly 2 is a stacked type electrode assembly, and a stacking direction of electrode plates in the electrode assembly 2 is perpendicular to the second direction Y.

It can be understood that the electrode assembly 2 is of a stacked type structure.

As an example, a stacking direction of electrode plates in the electrode assembly 2, the first direction X and the second direction Y are perpendicular to each other.

The electrode assembly 2 may include a positive electrode plate, a negative electrode plate, and a spacer, where the positive electrode plate and the negative electrode plate are stacked together, and the spacer is located between the positive electrode plate and the negative electrode plate. The stacking direction of the electrode plates in the electrode assembly 2 is the stacking direction of the positive electrode plate and the negative electrode plate. As an example, there are a plurality of positive electrode plates and a plurality of negative electrode plates, where the plurality of positive electrode plates and the plurality of negative electrode plates are stacked alternately.

When the battery cell 10 is in thermal runaway, the discharge medium between the positive electrode plate and the negative electrode plate may directly flow to the pressure relief mechanism 3, shortening the time for the discharge medium to reach the pressure relief mechanism 3.

In some embodiments, the first direction X is perpendicular to the second direction Y.

Embodiments of the present application provide a battery 100, including a battery cell 10 according to any one of the above embodiments.

Embodiments of the present application provide an electrical device, including a battery cell 10 according to any one of the above embodiments, and the battery cell 10 is configured to provide electric energy for the electrical device.

Referring to Fig. 4 to Fig. 7, some embodiments of the present application further provide a battery cell 10. The battery cell 10 includes a shell 1, an electrode assembly 2, a pressure relief mechanism 3, electrode terminals 4 and a first insulating member 5. The electrode assembly 2 is accommodated in the shell 1. The electrode assembly 2 includes a main body part 22 and tabs 21. Along a first direction X, the tabs 21 are arranged on both ends of the main body part 22. The tabs 21 on both ends of the main body part 22 have opposite polarities. The electrode assembly 2 is a wound type electrode assembly, and a winding centerline of the electrode assembly 2 extends along the first direction X. The first insulating member 5 is wrapped around the main body part 22. The shell 1 includes a shell body 11 and end covers 12. The shell body 11 is provided with openings at both ends along the first direction X. The end cover 12 corresponds to the opening one by one. The two end covers 12 close the two openings of the shell body 11, respectively. The electrode terminals 4 are arranged on the two end covers 12. The electrode terminal 4 on one end cover 12 is electrically connected to the tab 21 on one end of the main body part 22, and the electrode terminal 4 on the other end cover 12 is electrically connected to the tab 21 on the other end of the main body part. Along a second direction Y, the shell body 11 is provided with a first wall part 111 and a second wall part 112 opposite to each other. The first wall part 111 is configured to support the main body part 22. A channel gap 13 is formed between the second wall part 112 and the first insulating member 5. The channel gap 13 is configured to connect spaces in the shell 1 that are located at both ends of the main body part 22 along the first direction. The first direction X is perpendicular to a second direction Y. The pressure relief mechanism 3 is arranged on the first wall part 111, and along the first direction X, a center of the pressure relief mechanism 3 deviates from a center of the first wall part 111.

Only one pressure relief mechanism 3 is arranged on the first wall part 111, and in the first direction X, the pressure relief mechanism 3 does not extend beyond any end of the main body part 22. Along the first direction X, the size of the shell 1 is L, a distance between the center of the pressure relief mechanism 3 and the center of the first wall part 111 is L₁, where L₁/L ≥ 1/6, L ≥ 200 mm. Along the second direction Y, a minimum width of the channel gap 13 is H, satisfying: 1 mm ≤ H ≤ 5mm.

It should be noted that the embodiments in the present application and the features of the embodiments can be combined with each other without conflict.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
an electrode assembly, comprising a main body part and a tab, wherein the tab is arranged on at least one end of the main body part along a first direction;
a shell, comprising a first wall part and a second wall part, wherein along a second direction, the first wall part and the second wall part are arranged opposite to each other, the first wall part is configured to support the main body part, a channel gap is formed between the second wall part and the main body part, the channel gap is configured to connect spaces in the shell that are located at both ends of the main body part along the first direction, and the second direction intersects with the first direction; and
a pressure relief mechanism arranged on the first wall part, wherein along the first direction, a center of the pressure relief mechanism deviates from a center of the first wall part.

2. The battery cell according to claim 1, wherein along the first direction, the size of the shell is L, a distance between the center of the pressure relief mechanism and the center of the first wall part is L₁, satisfying: L₁/L ≥ 1/6.

3. The battery cell according to claim 2, wherein L₁/L ≥ 1/3.

4. The battery cell according to any one of claims 1 to 3, wherein along the first direction, the size of the shell is L, satisfying: L ≥ 200 mm.

5. The battery cell according to any one of claims 1 to 4, wherein along the second direction, a minimum width of the channel gap is H, satisfying: H ≥ 1mm.

6. The battery cell according to claim 5, wherein H ≤ 5mm.

7. The battery cell according to claim 6, wherein 2 mm ≤ H ≤ 3.5mm.

8. The battery cell according to any one of claims 1 to 7, wherein along the second direction, spacing between a midplane of the main body part and the second wall part is greater than spacing between the midplane of the main body part and the first wall part.

9. The battery cell according to any one of claims 1 to 8, wherein along the first direction, the pressure relief mechanism does not extend beyond any end of the main body part.

10. The battery cell according to any one of claims 1 to 8, wherein along the first direction, the pressure relief mechanism at least partially extends beyond one end of the main body part.

11. The battery cell according to any one of claims 1 to 10, wherein only one pressure relief mechanism is arranged on the first wall part.

12. The battery cell according to any one of claims 1 to 10, wherein a plurality of pressure relief mechanisms are arranged on the first wall part.

13. The battery cell according to claim 12, wherein two pressure relief mechanisms are arranged on the first wall part, and along the first direction, the two pressure relief mechanisms are located on two sides of the center of the first wall part, respectively.

14. The battery cell according to any one of claims 1 to 13, wherein the shell comprises:
a shell body, provided with an opening at at least one end along the first direction; and
an end cover, corresponding to the opening one by one, the end cover closing the opening,
wherein the first wall part and the second wall part are two opposite wall parts of the shell body.

15. The battery cell according to claim 14, wherein the shell body are provided with openings at both ends along the first direction.

16. The battery cell according to claim 14 or 15, wherein the shell body comprises a third wall part and a fourth wall part, the third wall part and the fourth wall part are arranged opposite to each other along a third direction, the first wall part, the third wall part, the second wall part and the fourth wall part are sequentially connected end to end, and the third direction intersects with the second direction.

17. The battery cell according to claim 16, wherein along the second direction, spacing between the first wall part and the second wall part is D₁; along the third direction, spacing between the third wall part and the fourth wall part is D₂, and D₂ < D₁.

18. The battery cell according to any one of claims 14 to 17, wherein the shell body is formed by bending a plate, and front and rear end parts of the plate are connected to each other along the circumferential direction of the opening.

19. The battery cell according to claim 18, wherein a connection position of the two end parts is located on the second wall part.

20. The battery cell according to claim 18 or 19, wherein the two end parts are connected by welding.

21. The battery cell according to any one of claims 14 to 20, wherein the shell body is a cuboid shell body, and the first direction is the length direction of the shell body.

22. The battery cell according to claim 21, wherein the length of the shell body is a, the width of the shell body is b, the height of the shell body is c, and b ≤ c ≤ a/1.5.

23. The battery cell according to any one of claims 1 to 22, wherein the pressure relief mechanism and the first wall part are integrally formed.

24. The battery cell according to claim 23, wherein the first wall part comprises a weak region and a non-weak region, the weak region is arranged along an edge of the pressure relief mechanism and connects the pressure relief mechanism and the non-weak region, and the weak region is configured to crack when the pressure in the battery cell is released.

25. The battery cell according to claim 24, wherein the first wall part is provided with a score groove, and the first wall part forms a weak region in a region where the score groove is provided.

26. The battery cell according to claim 25, wherein the score groove is a groove extending along a closed track.

27. The battery cell according to any one of claims 1 to 22, wherein the pressure relief mechanism and the first wall part are separately arranged, and the pressure relief mechanism is installed on the first wall part.

28. The battery cell according to any one of claims 1 to 27, wherein the battery cell further comprises a supporting member, along the second direction, the supporting member is arranged between the main body part and the first wall part, and the supporting member is configured to support the main body part.

29. The battery cell according to any one of claims 1 to 28, wherein the battery cell further comprises a first insulating member, the first insulating member is wrapped around the main body part, the first insulating member is configured to insulate and isolate the main body part from the shell, and along the second direction, the channel gap is formed between the first insulating member and the second wall part.

30. The battery cell according to any one of claims 1 to 29, wherein the electrode assembly is a wound type electrode assembly, and a winding centerline of the electrode assembly extends along the first direction.

31. The battery cell according to any one of claims 1 to 29, wherein the electrode assembly is a stacked type electrode assembly, and a stacking direction of electrode plates in the electrode assembly is perpendicular to the second direction.

32. The battery cell according to any one of claims 1 to 31, wherein the first direction is perpendicular to the second direction.

33. A battery, comprising the battery cell according to any one of claims 1 to 32.

34. An electrical device, comprising the battery cell according to any one of claims 1 to 32, the battery cell being configured to provide electric energy for the electrical device.
